# EUROPEAN PATENT APPLICATION

(11) **EP 1 600 215 A1**
(43) Date of publication of application: **30.11.2005**
(21) Application number: 05076230.1
(22) Date of filing: 26.05.2005
(51) Int. Cl.: B04C 3/06

(54) **In-line cyclone separator**

(30) Priority: 26.05.2004 NL 1026268
(71) Applicant: Flash Technologies N.V., Willemstad, Curaçao (AN); FMC Technologies C.V., Chicago, IL 60601 (US)
(72) Inventor: Larnholm, Per-Reidar, 15187 Moss (NO); Schook, Robert, 7221 GJ Steenderen (NL)
(74) Representative: Hylarides, Paul Jacques

(57) **Abstract**

The present invention provides a cyclone separator (1) for separating a mixture of solid particles, liquid and/or gas into a heavy fraction and a light fraction, the apparatus comprising an outer casing (2) defining a flow space through which the mixture is to flow, a first outlet (11) for the separated light fraction and second outlet (20) for the separated heavy fraction, wherein in the outer casing are arranged:
- a flow body (5) along which the mixture to be separated can be carried;
- at least one swirl element (6) arranged for setting the mixture into a rotating movement;
- an outlet element (7) having an inner passage for discharge of the light fraction and an outer surface which, together with the inner surface of the outer casing, defines an outer passage for discharge of the heavy fraction, the outlet element being provided with openings (12) through which the light fraction can enter the inner passage, said openings (12) extending obliquely with respect to the axial direction.

## Description

The present invention relates to a cyclone separator for separating a mixture containing solid particles, liquid and/or gas into a light fraction and a heavy fraction. The present invention also relates to a method of separating the mixture in the separator. The present invention also relates to a pipe for transporting said mixture, the pipe being provided with at least one of the cyclone separators.

Numerous devices are known for separating incoming flows of various liquids (for example oil and water), gas and solid particles (dust particles), liquid and gas (for example oil and natural gas) or solid particles, liquid and gas. One of the known techniques for separating such mixtures is the cyclone technique, wherein the incoming mixture is caused to rotate inside a cyclone tube, the rotation causing the relatively heavyweight parts of the mixture, for example the liquid in a liquid/gas mixture or the solid particles in a gas/solid particle mixture, to flow as a result of the centrifugal forces exerted on the rotating mixture in the direction of the walls of the tube, while the relatively lightweight fraction, for example the gas in the gas/liquid mixture, remains more or less in a central region inside the tube.

Inlet cyclones are employed in gravity separation vessels wherein some sort of pretreatment is performed on the mixture to be separated. The inlet cyclone is connected to the inlet of the gravity separation vessel and is provided with an outlet for the heavy fraction and an outlet for the light fraction, both outlets discharging into the interior of the gravity separation vessel for further separation of the mixture. An example of an inlet cyclone is disclosed in European patent application EP 1 187 667 A2.

Another type of cyclone separator is the so-called inline separator wherein the incoming mixture and at least a part of the outgoing mixture flows through a pipeline, the separator being essentially aligned with the pipeline. Inline cyclone separators can be subdivided in two different types.

In a first type, also known in the art as a degasser, the separator separates gas from liquid. The degasser is used when the continuous phase is the liquid in case of a gas/liquid mixture. An example of a degasser is disclosed in WO 01/00296 A1. In the degasser the liquid-continuous flow is brought into rotation by a plurality of swirl inducing guiding vanes. Due to the density difference between the gas and the liquid and the initiated centrifugal field, the gas is forced into the centre of the separator, implying a stable core of gas. Removal of the gas core is executed by means of a cylindrical gas-outlet pipe in the centre of the cyclone. The pipe has a number of cylindrical holes situated downstream of the swirl inducing guiding vanes. Due to the geometry of the separator, the removal of the gas takes place in radial direction.

One of the disadvantages of the degasser is that this type of separator can be operated in case of a liquid-continuous flow, i.e. a mixture wherein the main constituent is the liquid and wherein only gas bubbles exist when it is a two phase mixture. This means that in practice only volumetric gas fractions between 0% and 40% can be handled by such devices. When more gas is present in the incoming mixture, the separation efficiency drops dramatically.

A further disadvantages of the known degasser is that above a certain gas fraction the pressure drop across the gas-outlet becomes very high. This means that gas removal can lead to a collapse of the above mentioned gas core/liquid film which will create unstable behaviour and will deteriorate the separation characteristics of the separator.

A further drawback of the known degasser is that gas removal implies twice a directional change of the gas causing a relatively high pressure drop. The first time the direction of the gas is changed from a circumferential direction into a radial direction when the gas is entering the holes. The second time the direction of the gas is changed from the radial direction into the axial direction when the gas that has entered the openings is discharged through the gas-outlet pipe. For high gas loads with a volumetric gas fraction above 30% this may result in relatively large pressure drops and limited gas removal capacity.

The second type of inline cyclone separators is a separator, also referred to as a deliquidiser, wherein a gas-continuous feed is brought into rotation by a number of swirl inducing guiding vanes. The deliquidiser separates in this case the liquid from the gas. In this arrangement the continuous phase is the gas and in practice only volumetric gas fractions of less than 10% can be handled by such devices implying that the operating range of the deliquidiser is small. Due to the density difference and the created centrifugal field the liquid is forced towards the pipe-wall resulting in a stable liquid film moving in a direction of the gas-outlet. In the outlet region the gas and liquid are separated at a fixed streamwise position. The gas-outlet is a cylindrical open pipe, which is mounted in the flow space of the separator. An example of a deliquidiser is described in WO 02/056999 A1.

The known deliquidiser however has a number of drawbacks. For high volumetric liquid fractions, for example about 8-10%, the separation efficiency decreases dramatically as a result of carryover, i.e. the liquid is entrained by the gas and discharged through the gas-outlet pipe.

A further drawback is that the gas-outlet pipe forms a disturbance in the flow space of the separator, which may result in controllability problems due to the sudden removal of the driving phase (i.e. the gas). The abrupt removal of the gas may moreover lead to a collapsing liquid film, which also has a negative effect on the separation characteristics, for example the separation efficiency, of the deliquidiser.

It is an object of the present invention to overcome the above mentioned disadvantages of the known inline degasser- and deliquidiser devices.

It is a further object of the invention to provide a separator and a method of separating a mixture with an extended operating range compared to the existing in-line separator arrangements.

It is a still further object of the invention to provide a separator and a method of separating a mixture which is not clearly gas-continuous or liquid-continuous.

According to a first aspect of the present invention a cyclone separator is provided for separating a mixture containing solid particles, liquid and/or gas into a heavy fraction and a light fraction, the apparatus comprising an outer casing defining a flow space through which the mixture is to flow and having an inlet for the incoming mixture, a first outlet for the separated light fraction and second outlet for the separated heavy fraction, wherein in the outer casing are arranged:
- a flow body along which the mixture to be separated can be carried;
- at least one swirl element arranged between the flow body and the outer casing for setting the mixture into a rotating movement for the purpose of separating the mixture into the heavy and light fraction;
- an outlet element having a central, axially extending inner passage connected to the first outlet for discharge of the light fraction and an outer surface which, together with the inner surface of the outer casing, defines an outer passage connected to the second outlet for discharge of the heavy fraction, the outlet element being provided with one or more elongate openings through which the light fraction can enter the inner passage, said openings extending obliquely with respect to the axial direction.

The separator as described throughout the present application may be used for separating a gas- liquid mixture into a heavy fraction essentially containing liquid and light fraction essentially containing gas, for example gas and oil, or for separating a solid-gas mixture into heavy fraction essentially containing solid particles and a light fraction essentially containing gas. The separator may be used for separation of a mixture containing different liquids as well. When the mixture is a liquid-liquid mixture, the heavy fraction mainly contains a first liquid having a relatively high density, for instance water, and the light fraction mainly contains a second liquid having a relatively low density, for instance oil. Besides separating a two phase mixture, the separator according to the invention may also be used for separating a mixture having more than two phases (multi phase mixture).

By arranging the elongate openings in an oblique manner with respect to the axial direction (z-direction in the drawings) of the outlet element the circumferential movement (rotation) of the rotating mixture can be followed more easily, resulting in a more natural way of guiding the gas through the openings, with less change of the direction of the gas, and discharging the gas from the gas-outlet. A further effect is that the rotating movement of the mixture remains more stable for a longer axial distance, as a result of which the liquid carry-over in the gas-outlet is minimised. Also the pressure drop across the gas-outlet is only a fraction of the pressure drop in the conventional degasser outlet.

According to another aspect of the invention a separator is provided for separating a mixture containing solid particles, liquid and/or gas into a heavy fraction and a light fraction, the apparatus comprising an outer casing defining a flow space through which the mixture is to flow and having an inlet for the incoming mixture, a first outlet for the separated light fraction and second outlet for the separated heavy fraction, wherein in the outer casing are arranged:
- a flow body along which the mixture to be separated can be carried;
- at least one swirl element arranged between the flow body and the outer casing for setting the mixture into a rotating movement for the purpose of separating the mixture into the heavy and light fraction;
- an outlet element having a central, axially extending inner passage connected to the first outlet for discharge of the light fraction and an outer surface which, together with the inner surface of the outer casing, defines an outer passage connected to the second outlet for discharge of the heavy fraction;
wherein the outlet element is a tubular element having a substantially cylindrical downstream portion and a substantially diverging upstream portion, the diverging portion being provided with one or more openings through which the light fraction can enter the inner passage.

The provision of an outlet element of which the proximal part diverges from the proximal to the distal end, i.e. of which the cross-sectional area increases from its proximal to its distal end, removes the abrupt geometry change of the deliquidiser gas-outlet. It has surprisingly been found that removing the gas in a more smooth manner has a positive effect on the separating characteristics of the separator. As the continuous phase is in terms of axial distance gently removed from the rotating mixture, the system remains stable in the axial direction. Moreover, a relatively low pressure drop is present across the gas-outlet. Also the controllability of the separator is increased as the gas removal takes place along a larger axial distance and there is no abrupt removal of the driving force. Collapse of the liquid film causing liquid carryover is therefore avoided.

It is noted that the openings in the divergent element may have any shape, for example circular, rectangular, slot-like, etc..

According to both aspects of the invention the separation characteristics are improved by having the incoming mixture follow a more natural path through the separator, either by providing angled elongate openings in the outlet element or by providing a divergent portion of the outlet element. However, the separation characteristics of the separator is further improved when the diverging shape of the outlet element is combined with the angled elongate openings or slots in the outlet element. The special shape of the outlet element will provide sufficient space for the light fraction to be removed from the separator and will, in combination with the angled slots extending more or less in parallel with the streamlines, result in the earlier described low pressure drop and the non-sudden removal of the driving phase.

According to a preferred embodiment of the invention the elongate openings extend within an angle of 30° with respect to the local flow direction of the light fraction. This means that the streamlines of the rotating flow are within 30° of the direction of which the openings extend. In this way a fairly natural flow of the mixture can be achieved, resulting in an improved separating efficiency of the separator. In an especially preferred embodiment the openings extend substantially parallel with the local main flow direction of the light fraction.

In practical situations the angle between the longitudinal direction of an opening and the axial direction (z-axis) of the outlet element is between 0° and 90°, more preferable between 10° and 80° and even more preferable between 30 and 60 degrees.

Depending on the load of the incoming mixture, the shape and number of blades in the swirl element etc., the angle between the streamlines of the mixture and the actual direction will vary, in practice between about 10 and 80°. Therefore the angled elongate openings are arranged in the outlet element so as to minimise the angle between the streamlines and the openings for ensuring a more natural, smooth flow of the gas through the openings. When the angle between the longitudinal direction of the opening and the actual direction of the outlet element is chosen between 30° and 60°, or, more preferable, about 45°, a cyclone separator of an extended operating range is provided, the range being typically defined by a volumetric gas fraction of 30-95% and a volumetric liquid fraction of 5-70%.

In a further preferred embodiment the combined area of the openings in the outlet element corresponds substantially to the cross-sectional area of the inner passage, so as to minimise the pressure drop across the openings.

In a further embodiment the length of each of the openings is about 10-50% of the circumference of the outer surface of the outlet element. If the openings or slots are arranged with a length of about 50% of the circumference of the outer surface and the angle between the slots and the actual direction is about 45°, the length of the slots will be comparable to the mean diameter of the outlet element. If the slots are made too long, the structural integrity of the outlet part may be jeopardised, while if the slots are too short this will result in a relatively large pressure drop across the outlet element.

In a further preferred embodiment the consecutive openings extend at shifted positions, so as to ensure a evenly distributed discharge of the light fraction through the openings.

In a further preferred embodiment the diverging portion of the outlet element has a substantially conical shape. The conical shape may demonstrate a constant diameter increase per unit of length (also known as a "straight" cone, this type of cone may be manufactured relatively easily). Other types of cones are also conceivable, such as convex or concave like cone shapes, truncated cones, etc.

In a further preferred embodiment one or more anti-creep elements are arranged in the flow space between the flow body and the openings in the outlet element. As the mixture that has been brought into rotation by the swirl inducing guiding vanes has a substantial axial speed component in the core region of the cyclone, liquid creep may occur along the outlet element, whereby liquid droplets from the inlet flow may enter the inner passage of the outlet element through the openings or slots provided in the outlet element. When the capacity of the separator is increased, i.e. when the pressure and/or the quantity of the mixture is increased, such liquid creep will become worse. This may limit the capacity of the cyclone, whereby the cyclone separator for the desired separation conditions would have to increase in size.

In order to prevent the effects of the liquid creep one or more anti-creep elements are arranged upstream of the openings in the outlet element, which anti-creep elements deflect the liquid flow outward, so that the liquid can be carried along by the turbulence flow on the outer side of the outlet element. The anti-creep element is in fact a creep flow interrupter which may take the form of a hollow truncated cone or, in another embodiment, may take the form of a substantially flat dish or flange. The anti-creep element is preferably arranged close to the upstream side of the openings. It is however also conceivable to arrange the anti-creep element at one or more other locations, for example more upstream. For example when the flow body and the outlet element are integrated into one structural element, the anti-creep element may be provided on different locations between the downstream end of the swirl element and the upstream end of the openings in the outlet element.

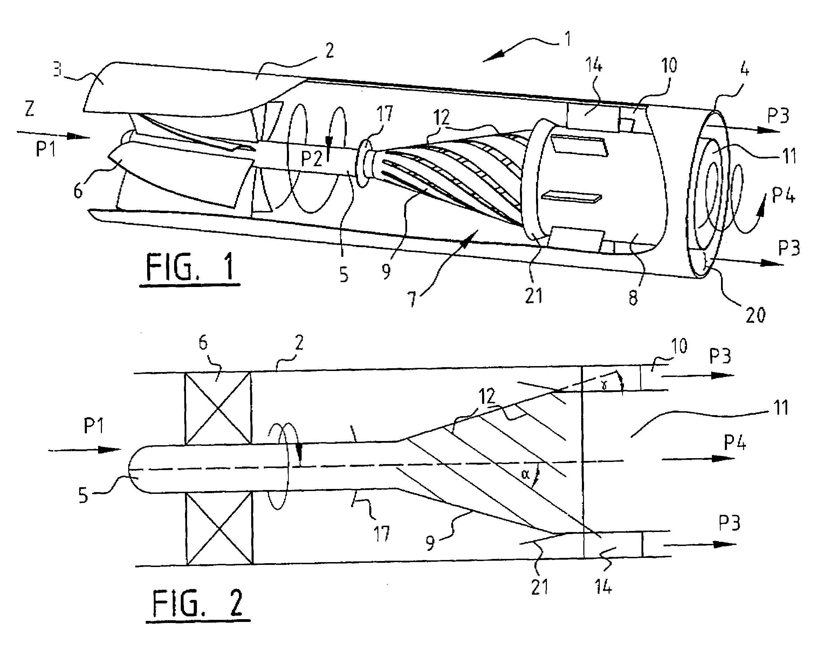

In a further preferred embodiment blocking means are arranged downstream of the openings for at least partially blocking the light fraction from entering the outer passage. The blocking means can be embodied for example as a flange or a hollow truncated form extending from the outer surface of the outlet element. The gas will accumulate upstream of the blocking means, causing the gas to be discharged through the openings in the outlet element instead of through the second passage between the outer element and the outer casing. The design and size of the blocking means will depend on the gas/liquid or gas/solid particle ratios. The blocking plate may for example be a flange (plate) which can be flat or tapered. The flange 21 may extend slightly inclined with respect to the outlet element so as to "catch" the gas at the distal ends of the openings, as is shown schematically in figure 1.

In further preferred embodiments counter-swirl elements are arranged in the outer passage and/or the inner passage downstream of the openings, and preferably downstream of the blocking plate (if any) so as to reduce the swirling movement of the mixture flowing through the outer passage and inner passage respectively. By arranging a counter swirl-element in the second discharge channel to reduce swirling movement of the heavy fraction, the pressure drop across the second passage is decreased, whereby the discharge of the heavier fraction through the second passage is improved. By arranging a counter swirl-element in the first discharge channel to reduce swirling movement of the light fraction, the pressure drop across the inner passage is decreased, whereby the discharge of the light fraction through the inner passage is improved.

The counter swirl-elements may comprise one or more guiding vanes, which may be curved or just straight blades, and which are shaped so as to reduce the rotating movement of the heavy fraction. The curvature of the guiding vanes can vary. When for instance the curvature of a swirling blade increases in flow direction, the mixture flowing therealong will then undergo an increasingly more rapid swirling movement. Conversely, a mixture flowing along a swirling blade with decreasing curvature, undergoes an increasingly slower swirling movement. In case of curved guiding vanes one can therefore modify the swirling speed of the heavy fraction and hence the pressure drop through a correct choice of the curvature.

According to another aspect of the invention, a method is provided for separating a mixture containing solid particles, liquid and/or gas into a heavy fraction and a light fraction, the method comprising the steps of:
- feeding the mixture through the inlet into the flow space of a cyclone separator as claimed in any of the preceding claims;
- guiding the mixture along the one or more swirl-elements for causing the mixture to rotate so as to fling the heavy fraction into a outer region adjacent the inner surface of the outer casing and so as to keep the light fraction in a central region;
- guiding the heavy fraction in the outer region through the outer passage;
- discharging the heavy fraction from the second outlet;
- guiding the light fraction in the core region through the openings in the outlet element;
- discharging the light fraction from the first outlet.

Further advantages, features and details of the present invention will be elucidated in the light of the following description, with reference to the annexed drawings, in which:
Figure 1 shows a partly broken away view in perspective of a first preferred embodiment of the separator according to the present invention;
Figure 2 shows a longitudinal section of the first embodiment shown in Figure 1;
Figure 3 shows a partly broken away view in perspective of a second preferred embodiment of the separator according to the present invention;
Figure 4 shows a partly broken away view of a third preferred embodiment according to the invention; and
Figure 5 shows a partly broken away view in perspective of a fourth preferred embodiment of the present invention.

The embodiments of the separators according to the invention shown in the drawings are especially intended for separation of a gas phase (gas phase vapour) from a liquid phase (water/oil), for example in a pipeline leading to an oil platform. However, as indicated earlier, the separators can be used separating any mixture of one or more liquids, one or more gasses and/or one of more different types of solid particles.

Figure 1 shows a separator 1, comprising a tube 2 which at its proximal end is provided with an inlet 3 for connecting to the supply part of a pipeline (not shown) and which at its distal end is provided with an outlet 4 for connecting to a further part (not shown) of the pipeline. In the flow space defined by the interior of the tube 2 a central flow body 5 is arranged, extending in the axial direction (or Z-direction, as shown in Figure 1).

Between the inner surface of the tube 2 and the outer surface of the flow body 5 are arranged a number of curved guiding vanes 6. In the shown embodiment one edge of each guiding vane is attached to the inner surface of the tube 2, while the opposite edge of the guiding vane is attached to the flow body 5. Other arrangements are however also possible, for example wherein the guiding vanes are attached to the flow body 5 only. The function of the guiding vanes is to bring the incoming mixture (arrow P₁) flowing along the guiding vanes 6 into rotation (as shown by arrow P₂). In the embodiments shown the mixture is caused to rotate in a clockwise direction. One will understand that in other embodiments (not shown) the rotation may equally well be counterclockwise.

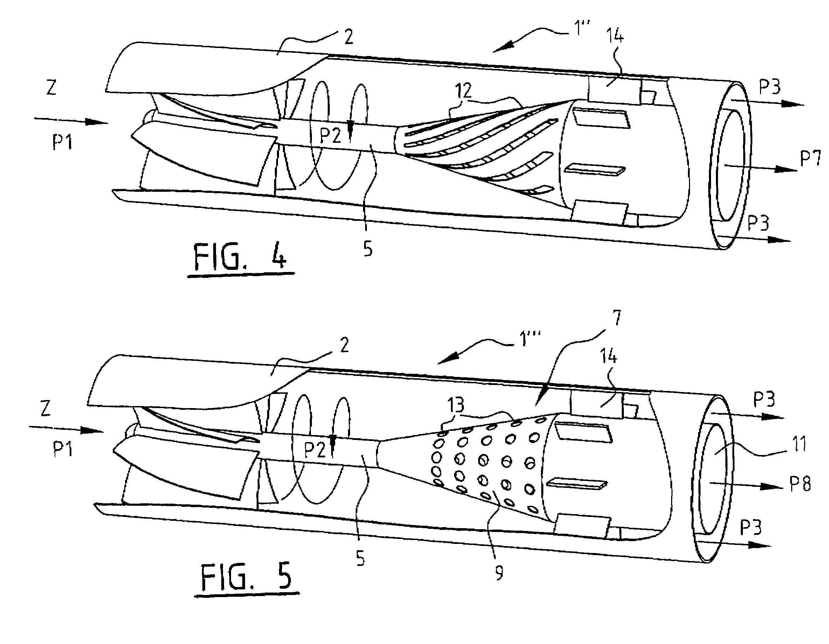

A part of the mixture is flung outward by the rotating movement and is transported in a substantially annular outer region O (Figure 2), while another part of the mixture, that is the relatively light weight part thereof, will remain in a central region or core region C. In Figure 5 the boundary between the outer region O and core region C is denoted by a dotted line. In practice however there is no abrupt boundary between both regions. In fact a transition region between both regions exists.

The relatively heavy fraction of the mixture present in the outer region O of the flow space will eventually reach an outer passage 10 defined between the inner surface of the tube 2 and the outer surface of an axially extending central outlet element 7 arranged in the flow space. The passage leads to the distal end of the tube 2 and the heavy fraction can be discharged through the outlet opening 20 thereof (flow P₃).

The light fraction in the inner or core region C of the flow space will keep rotating until it reaches a divergent part 9 (in the figures shown as a conical part), which is provided with a number of elongate openings or slots 12. Slots 12 provide access to an inner passage 1, defined inside the outlet element 7. The slots 12 are arranged so as to extend obliquely (angle α with respect to the axial direction (Z-direction)) of the tube 2. Due to the oblique arrangement of the slots 12 and to the divergent shape of part 9 of the outlet element 7 the rotating light fraction arriving at the position of the outlet element 7 will enter the slots 12 in a natural, smooth way. In other words, the streamlines of the rotating light fraction will be more or less parallel to the slots 12, which in itself prevents the double change of direction of the gas during the gas removal as mentioned above (from circumferential into radial movement and from radial into axial movement, as is the case in the standard degasser), while the divergent shape of the proximal part 9 of the outlet element 7 ensures a smooth transition between the flow body 5 and the outlet element 7 and therefor a practically undisturbed flow along the outlet element 7. As result of the natural way in which the light fraction enters the inner passage 11, the pressure drop across the slots 12 is minimised.

It is noted that in Figure 1 the light fraction leaving the tube 12 (arrow P₄) is shown as if it still rotates. If the divergent part 9 and the angled slots 12 are arranged suitably, this may in fact be the case. However, if the angled slots 12 are not completely in line with the flow lines of the light fraction and/or the inclination (angle γ with respect to the z-axis, the inclination angle γ preferably varying between 5 and 30 degrees) of the divergent part 9 is not exactly matched to the flow lines, the light fraction in the inner passage 11 will not rotate or will rotate only slightly. Arrow P₄ is intended to clarify the natural way the light fraction will enter and leave the inner passage 11. In this respect it is noted that in an embodiment having a counter-swirl element in the inner passage 11, as will be discussed hereafter, the light fraction leaving the inner passage will not rotate or hardly do so.

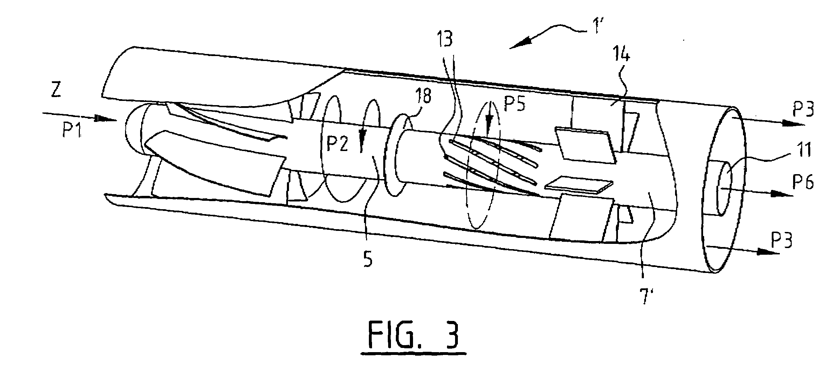

In Figure 3 another embodiment of the present invention is shown. In this figure like elements are denoted by like reference signs and the description thereof will be will be omitted here. In this embodiment the outlet element 7' has a tubular shape and is connected to the flow body 5. In the cylindrical tube 7 angled slots 12 are arranged, wherein the angle α is chosen such that the streamlines of the rotating light fraction at the position of the openings more or less correspond to the longitudinal direction of the slots 12. Although less "natural" than in the embodiment shown in figures 1 and 2 because of the tubular shape of the outlet element 7 (inclination angle γ substantially zero) the light fraction will be able to follow a fairly smooth path through the slots 12 in order to enter the inner passage 11 and to leave the tube 2 at its distal end ( 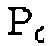 ).

In Figure 4 a third embodiment of the present invention is shown. The third embodiment corresponds to the first embodiment and a description of identical parts thereof will be omitted here. The difference between the first and third embodiment is that the slots 12 extend at a different angle α with respect to the axial direction (z direction) of the separator 1. Instead of an angle α between 0 and 90°, the angle between the angled slot 12 and the actual direction according to the third embodiment is 90°<α<180°. When the total slot area through which the light phase can leave is chosen to be about as large as or larger than the cross-sectional area of the inner passage of the outlet element, a good separation efficiency can be achieved in this embodiment as well.

Figure 5 shows a further preferred embodiment of the present invention, which corresponds to a great extent the first embodiment shown in Figure 1. Except if stated otherwise the elements of the first and fourth embodiments are identical and therefore a description thereof will be omitted here. A difference between the first and fourth embodiment is that in the divergent part 9 of the outlet element 7 a number of circular openings 13 are arranged. Although in this embodiment the slots are circular, or at least none-elongate, and therefore the streamlines will not be substantial parallel to the openings, the divergence of the proximal part 9 of the outlet element 7 prevents distortions of the flow of the heavy fraction and therefore improves the natural way the light fraction will enter the inner passage 11. After the light fraction is guided through the openings 13 and has entered the inner section 11, the light fraction is discharged (P₈) through the outlet of the tube 2.

In order to reduce the pressure drop in the outer discharge passage 10, formed in the flow space of the tube 2, a number of counter swirl-elements 14 are arranged in the outer passage 10. The heavy fraction flows through the outer region O of the tube 2 in the downstream direction, swirling in the meantime as a consequence of the earlier mentioned guiding vanes of the swirl elements 6. This swirling movement is impeded in that the heavy fraction is guided along the counter-swirl elements 13 formed by a number of swirling blades. In the shown embodiment the swirling blades are straight. In another embodiment (not shown) the swirling blades each consist of a first swirling blade part at the entrance and a second swirling blade part at the exit, wherein the first blade part is curved or twisted towards the z-direction (the first blade part extending substantially parallel with the streamlines) and the second blade part extends in axial direction. This arrangement makes the initially rapidly swirling heavy fraction to be gradually caused to swirl less rapidly. Due to this decrease of velocity of the mixture there will be a pressure gain and hence a lower pressure drop across the total separator.

In another preferred embodiment also the inner passage 11 is provided with one or more counter-swirl elements, causing any rotation in the flow of the light fraction in the inner passage 11 to be reduced resulting in a reduced pressure drop across the separator.

It has been found in practice that on the outer surface of the flow body 5 and on the outer surface of the outlet element 7 connected integrally with the flow body 5 creep of liquid can take place along the outer surface thereof, due to the relatively low pressure there, which would mean that this liquid would be carried along by the in the axial direction moving light fraction and would enter the slots 12 or openings 13 in the outlet element 7. In order to prevent this undesired effect, a creep-flow interrupter 17,18 (see figures 1 and 2 respectively) may be arranged in the separator according to any of the embodiments of the present invention. The creep-flow interrupter 17 deflects the liquid flow outward along the flow element 5 and/or the outlet element 7, so that the liquid can be carried along by the mixture in the outer region of the separator. In Figure 1 a specific embodiment of a liquid-creep interrupter is shown which is a flange in the form of a hollow truncated cone 17, while in Figure 2 the liquid-creep interrupter takes the form of a substantially flat flange or dish 18. Other shapes of liquid-creep interrupters are also conceivable. It may also be conceivable to arrange two or more liquid-creep interrupters along the flow body 5 and/or the outlet element 7 and also the exact location of the specific interrupters may vary depending on the flow conditions (for example depending on the load, the gas/liquid ratio of the incoming mixture, the minimum separation capacity, etc.).

The present invention is not limited to the above described preferred embodiments thereof. The rights applied for are defined by the following claims.

## Claims

1. Cyclone separator for separating a mixture containing solid particles, liquid and/or gas into a heavy fraction and a light fraction, the apparatus comprising an outer casing defining a flow space through which the mixture is to flow and having an inlet for the incoming mixture, a first outlet for the separated light fraction and a second outlet for the separated heavy fraction, wherein in the outer casing are arranged:
- a flow body along which the mixture to be separated can be carried;
- at least one swirl element arranged between the flow body and the outer casing for setting the mixture into a rotating movement for the purpose of separating the mixture into the heavy and light fraction;
- an outlet element having a central, axially extending inner passage connected to the first outlet for discharge of the light fraction and an outer surface which, together with the inner surface of the outer casing, defines an outer passage connected to the second outlet for discharge of the heavy fraction, the outlet element being provided with one or more elongate openings through which the light fraction can enter the inner passage, said openings extending obliquely with respect to the axial direction.

2. Separator as claimed in claim 1, wherein the openings extend within an angle of 30 degrees with respect to the local flow direction of the light fraction.

3. Separator as claimed in claim 1 or 2, wherein the openings extend substantially parallel with the local main flow direction of the light fraction.

4. Separator as claimed in claim 1, 2 or 3, wherein the angle between the longitudinal direction of an opening and the axial direction of the outlet element is between 0 and 90 degrees.

5. Separator as claimed in any of claims 1-4, wherein the angle between the longitudinal direction of an opening and the axial direction of the outlet element is between 10 and 80 degrees.

6. Separator as claimed in any of the preceding claims, wherein the angle between the longitudinal direction of an opening and the axial direction of the outlet element is between 30 and 60 degrees, preferably about 45 degrees.

7. Separator as claimed in any of the preceding claims, wherein the combined area of the openings corresponds substantially to the cross-sectional area of the inner passage.

8. Separator as claimed in any of the preceding claims, wherein the length of each of the openings is about 10-50% of the circumference of the outer surface of the outlet element.

9. Separator as claimed in any of the preceding claims, wherein consecutive openings extend at shifted positions.

10. Separator as claimed in any of the preceding claims, wherein the outlet element is a tubular element having a substantially cylindrical downstream portion and a substantially diverging upstream portion, the diverging portion being provided with one or more openings through which the light fraction can enter the inner passage.

11. Cyclone separator for separating a mixture containing solid particles, liquid and/or gas into a heavy fraction and a light fraction, the apparatus comprising an outer casing defining a flow space through which the mixture is to flow and having an inlet for the incoming mixture, a first outlet for the separated light fraction and second outlet for the separated heavy fraction, wherein in the outer casing are arranged:
- a flow body along which the mixture to be separated can be carried;
- at least one swirl element arranged between the flow body and the outer casing for setting the mixture into a rotating movement for the purpose of separating the mixture into the heavy and light fraction;
- an outlet element having a central, axially extending inner passage connected to the first outlet for discharge of the light fraction and an outer surface which, together with the inner surface of the outer casing, defines an outer passage connected to the second outlet for discharge of the heavy fraction;
wherein the outlet element is a tubular element having a substantially cylindrical downstream portion and a substantially diverging upstream portion, the diverging portion being provided with one or more openings through which the light fraction can enter the inner passage.

12. Separator as claimed in claim 10 or 11, wherein the diverging portion has a substantially conical shape.

13. Separator as claimed in claim 11, wherein the openings have an elongated shape and extend obliquely with respect to the axial direction of the outlet element.

14. Separator as claimed in any of the preceding claims, wherein between the flow body and the openings in the outlet element one ore more anti-creep elements are arranged.

15. Separator as claimed in any of the preceding claims, wherein the flow body and outlet element are integrated.

16. Separator as claimed in claim 15, wherein an anti-creep element comprises a flange extending from the outer surface of the outlet element.

17. Separator as claimed in any of the preceding claims, wherein a counter-swirl element is arranged in the outer passage downstream of the openings so as to reduce the swirling movement of the mixture flowing through the outer passage.

18. Separator as claimed in any of the preceding claims, wherein a counter-swirl element is arranged in the inner passage downstream of the openings so as to reduce the swirling movement of the mixture flowing through the inner passage.

19. Separator as claimed in any of the preceding claims, comprising blocking means arranged downstream of the openings for at least partially blocking the light fraction from entering the outer passage.

20. Separator as claimed in claim 19, wherein the blocking means comprise one or more flanges extending from the outer surface of the outlet element.

21. Separator as claimed in any of the preceding claims, wherein the outer casing is substantially tubular and the outer passage is annular.

22. Separator as claimed in any of the preceding claims, wherein the separator is adapted to be arranged between pipes of a pipe line.

23. Separator as claimed in any of claims 1-21, wherein the cyclone separator is adapted so as to constitute a part of a pipe line.

24. Pipe for transporting a mixture of solid particles, liquid and/or gas, the pipe being provided with at least one cyclone separator according to any of the preceding claims.

25. Method of separating a mixture containing solid particles, liquid and/or gas into a heavy fraction and a light fraction, the method comprising the steps of:
- feeding the mixture through the inlet into the flow space of a cyclone separator as claimed in any of the preceding claims;
- guiding the mixture along the one or more swirl-elements for causing the mixture to rotate so as to fling the heavy fraction into a outer region adjacent the inner surface of the outer casing and so as to keep the light fraction in a central region;
- guiding the heavy fraction in the outer region through the outer passage;
- discharging the heavy fraction from the second outlet;
- guiding the light fraction in the core region through the openings in the outlet element;
- discharging the light fraction from the first outlet.

26. Separator or method according to any of the preceding claims, wherein the mixture is a liquid-liquid mixture, for instance water and oil, the heavy fraction of which mainly containing high density liquid, for instance water, and the light fraction mainly containing low density liquid, for instance oil.

27. Separator or method according to any of the preceding claims, wherein the mixture contains gas and solid particles, the heavy fraction mainly containing solid particles and the light fraction mainly containing gas.

28. Separator or method according to any of the preceding claims, wherein the mixture is a gas-liquid mixture, for instance natural gas and oil, the heavy fraction mainly containing liquid and the light fraction mainly containing gas.
